(19) Europäisches Patentamt
European Patent Office
Office européen des brevets

(11) **EP 4 757 442 A1**

(12) **EUROPEAN PATENT APPLICATION**
published in accordance with Art. 153(4) EPC

(43) Date of publication:
**10.06.2026 Bulletin 2026/24**

(21) Application number: **24851353.3**

(22) Date of filing: **21.05.2024**

(51) International Patent Classification (IPC):
**H04W 56/00** (2009.01)     **H04W 4/38** (2018.01)
**H04W 52/02** (2009.01)

(52) Cooperative Patent Classification (CPC):
**H04W 4/38; H04W 52/02; H04W 56/00**

(86) International application number:
**PCT/JP2024/018659**

(87) International publication number:
**WO 2025/032919 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 JP 2023127467**

(71) Applicant: **SMC Corporation
Tokyo 104-0031 (JP)**

(72) Inventors:
• **GANDO Takashi
Tsukubamirai-shi, Ibaraki 300-2493 (JP)**
• **KUWAHARA Toshiaki
Tsukubamirai-shi, Ibaraki 300-2493 (JP)**

(74) Representative: **Keil & Schaafhausen
Patentanwälte PartGmbB
Bockenheimer Landstraße 25
60325 Frankfurt am Main (DE)**

(54) **REMOTE WIRELESS DEVICE**

(57)     A remote wireless device (20) that performs wireless communication with a base wireless device (10) comprises: a communication unit (120) capable of receiving, in a reception cycle (Tr), a synchronization establishment signal (SE) transmitted in each transmission cycle (Tt); and a synchronization unit (122) that, if the synchronization establishment signal has been received, synchronizes the generation timing of a clock signal of the remote wireless device with a clock signal of the base wireless device. The reception cycle is the sum of a first period (T1) in which the synchronization establishment signal can be received by the communication unit and a second period (T2) in which the synchronization establishment signal cannot be received, and is neither a value obtained by multiplying the transmission cycle by a positive integer nor a value obtained by multiplying the transmission cycle by the reciprocal of a positive integer.

FIG. 1

EP 4 757 442 A1

**Description**

TECHNICAL FIELD

The present invention relates to a remote wireless device.

BACKGROUND ART

JP 2021-190855 A discloses a wireless sensor terminal that can operate in a mode with low power consumption. The wireless sensor terminal periodically searches for and receives a control signal from a base station. The wireless sensor terminal periodically suspends the base station search when operating in the low power mode.

SUMMARY OF THE INVENTION

According to the disclosure of JP 2021-190855 A, when a control signal is transmitted from a base station during a period in which the wireless sensor terminal is suspending the base station search, the wireless sensor terminal cannot receive the control signal.
The present invention has the object of solving the aforementioned problems.
An aspect of the present invention is characterized by a remote wireless device configured to carry out wireless communication with a base wireless device, the remote wireless device including a communication unit configured to receive in a reception cycle a synchronization establishment signal transmitted from the base wireless device at each transmission cycle, and a synchronization unit configured to synchronize a generation timing of a clock signal of the remote wireless device with a clock signal of the base wireless device, in a case that the synchronization establishment signal has been received, wherein the reception cycle is a sum of a first period in which the communication unit is capable of receiving the synchronization establishment signal and a second period in which the communication unit is not capable of receiving the synchronization establishment signal, and has neither a value obtained by multiplying the transmission cycle by a positive integer nor a value obtained by multiplying the transmission cycle by a reciprocal of a positive integer.
According to the present invention, synchronization of wireless communication is easily established.
The above and other objects, features, and advantages of the present invention will be easily understood from the following description of preferred embodiments, which will be described with reference to the accompanying drawings.

BRIEF DESCRIPTION OF DRAWINGS

[FIG. 1] FIG. 1 is a diagram showing an example of the configuration of a wireless communication system including a base wireless device and a plurality of remote wireless devices;
[FIG. 2] FIG. 2 is a diagram illustrating a sequence of wireless communication carried out between the base wireless device and the remote wireless devices;
[FIG. 3] FIG. 3A and FIG. 3B are diagrams illustrating a change in internal voltage within the remote wireless device when synchronization of the wireless communication is established;
[FIG. 4] FIG. 4A and FIG. 4B are diagrams illustrating the relationship between a transmission cycle and a reception cycle of a synchronization establishment signal;
[FIG. 5] FIG. 5A and FIG. 5B are diagrams illustrating a change in the internal voltage within the remote wireless device when the synchronization of the wireless communication is established;
[FIG. 6] FIG. 6 is a diagram illustrating a change in the internal voltage within the remote wireless device when the synchronization of the wireless communication is established;
[FIG. 7] FIG. 7A is a diagram illustrating an example of a parameter that is used to change a first period, and FIG. 7B and
FIG. 7C are diagrams illustrating tables that are used for changing the first period; and
[FIG. 8] FIG. 8 is a flowchart showing a synchronization establishment processing procedure of the wireless communication in the remote wireless device.

DETAILED DESCRIPTION OF THE INVENTION

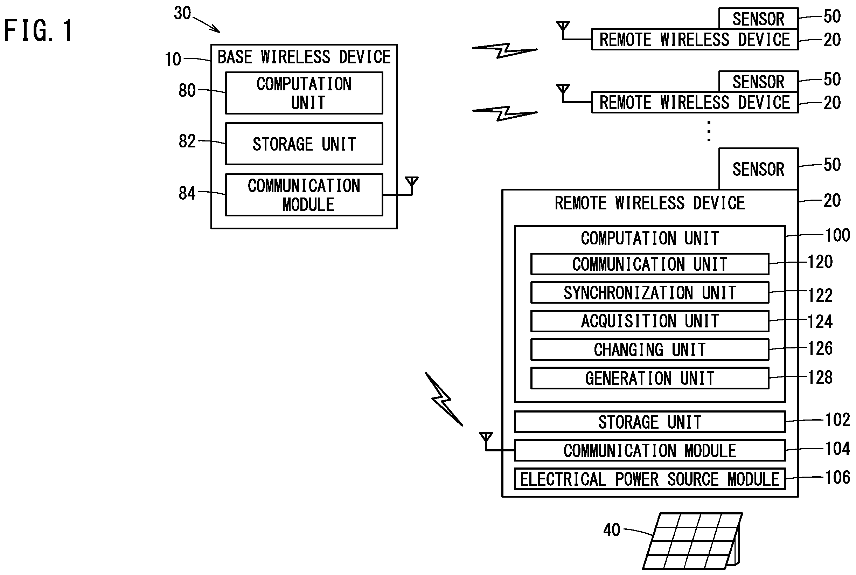

FIG. 1 is a diagram showing an example of the configuration of a wireless communication system 30 including a base wireless device 10 and a plurality of remote wireless devices 20. The wireless communication system 30 is used for wireless communication within an industrial facility, for example, as disclosed in JP 2017-188868 A. The base wireless device 10 is supplied with electrical power by a commercial electrical power source.

All of the plurality of remote wireless devices 20 are supplied with electrical power by a low output electrical power source 40. The low output electrical power source 40, for example, is an energy harvester, a wireless electrical power supplying facility, a small capacity battery, or the like. An energy harvester is a small scale electrical power generator that generates electrical power, for example, using light, sound, pressure, vibrations, or the like. There are cases in which the generated electrical power output of such electrical power generators may decrease depending on environmental conditions and the like.

In FIG. 1, an example is shown in which, as the low output electrical power source 40, there is used a small scale electrical power generator that generates electrical power using sunlight. In the case of an electrical power generator that uses sunlight, the generated electrical power output decreases as the amount of sunlight decreases. The voltage that is supplied internally to each of the plurality of remote wireless devices 20 is a low voltage on the order of several volts, and the voltage may change depending on the generated electrical power output of the low output electrical power source 40. In the present embodiment, the generated electrical power output of the low output electrical power source 40 is reduced due to a decrease in the hours of sunlight.

Wireless communication is carried out between the base wireless device 10 and each of the remote wireless devices 20. The base wireless device 10 is controlled by a non-illustrated control device that is connected by means of wires or wirelessly. The control device may be, for example, a PLC (Programmable Logic Controller) that monitors and controls an industrial facility.

A sensor signal is input from a sensor 50, which is an external device, to one of the remote wireless devices 20. The remote wireless device 20, based on the input sensor signal, transmits data DT to the base wireless device 10 by way of wireless communication. The base wireless device 10 transfers the data DT that is received from each of the remote wireless devices 20 to the above-mentioned control device. The control device uses the transferred data DT and thereby carries out data processing.

The base wireless device 10 includes a computation unit 80, a storage unit 82, and a communication module 84. The computation unit 80 includes a processor such as a CPU (Central Processing Unit) or a GPU (Graphics Processing Unit) or the like. More specifically, the computation unit 80 contains a processing circuitry.

The computation unit 80 may be realized by an integrated circuit such as an ASIC (Application Specific Integrated Circuit) or an FPGA (Field Programmable Gate Array) or the like, or alternatively, an electronic circuit including a discrete device.

The storage unit 82 includes a volatile memory such as a RAM (Random Access Memory) or the like, and a nonvolatile memory such as a ROM (Read Only Memory) or a flash memory or the like. The volatile memory is used as a working memory for the processor. The nonvolatile memory stores a program and the like to be executed by the processor.

The computation unit 80, by executing the aforementioned program that is stored in the storage unit 82, establishes the synchronization and maintains the synchronization of the wireless communication between itself and the remote wireless devices 20. Specifically, the computation unit 80 broadcasts via the communication module 84 a synchronization establishment signal SE in order to establish the synchronization of the wireless communication. After having established the synchronization of the wireless communication with the remote wireless devices 20, in order to maintain the synchronization thereof, the computation unit 80 broadcasts a synchronization maintenance signal SM via the communication module 84.

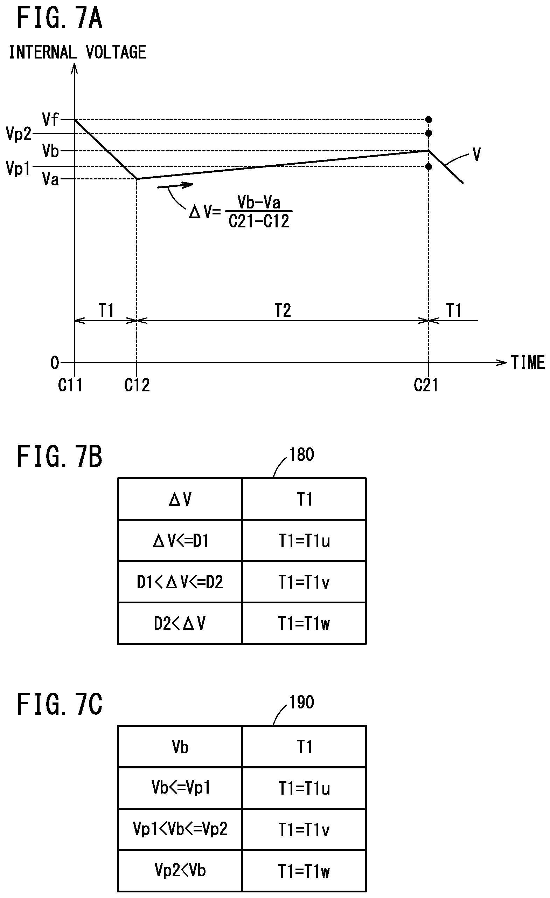

Further, by executing the aforementioned program that is stored in the storage unit 82, the computation unit 80, in a state in which the synchronization of the wireless communication is established or maintained, receives via the communication module 84 the aforementioned data DT between itself and the remote wireless devices 20. Moreover, in the wireless communication after having established the synchronization, the frequency is switched in a cyclical manner. Stated otherwise, in the wireless communication after having established the synchronization, a frequency hopping method is adopted. The storage unit 82 stores in advance tables 180 and 190, which will be described later with reference to FIG. 7B and FIG. 7C. The communication module 84 is used in the aforementioned wireless communication.

Each of the remote wireless devices 20 comprises a computation unit 100, a storage unit 102, a communication module 104, and an electrical power source module 106. The computation unit 100 includes a processor such as a CPU, a GPU, or the like. More specifically, the computation unit 100 includes a processing circuitry. The storage unit 102 includes a volatile memory such as a RAM or the like, and a nonvolatile memory such as a ROM or a flash memory or the like. The volatile memory is used as a working memory for the processor. The nonvolatile memory stores a program and the like to be executed by the processor.

The communication module 104 is used in the aforementioned wireless communication. The electrical power source module 106 converts the electrical power from the low output electrical power source 40, and provides the electrical power within the remote wireless device 20.

The computation unit 100 comprises a communication unit 120, a synchronization unit 122, an acquisition unit 124, a changing unit 126, and a generation unit 128. The communication unit 120, the synchronization unit 122, the acquisition unit 124, the changing unit 126, and the generation unit 128 are realized by the computation unit 100 executing a program that is stored in the storage unit 102.

The communication unit 120 receives via the communication module 104 the synchronization establishment signal SE in order to establish the synchronization of the wireless communication. The communication unit 120 receives via the communication module 104 the synchronization maintenance signal SM in order to maintain the synchronization of the wireless communication. The communication unit 120 transmits to the base wireless device 10 via the communication module 104 the data DT that is generated by the later-described generation unit 128. The communication unit 120 receives via the communication module 104 a confirmation acknowledgement signal ACK that is transmitted from the base wireless device 10 with respect to the data DT that was transmitted.

In the case that the synchronization establishment signal SE has been received by the communication unit 120, the synchronization unit 122 synchronizes the generation timing of a clock signal of the remote wireless device 20 with the generation timing of a clock signal of the base wireless device 10. In the case that the synchronization maintenance signal SM has been received by the communication unit 120, the synchronization unit 122 corrects the generation timing of the clock signal of the remote wireless device 20, and thereby maintains the synchronization of the wireless communication with the base wireless device 10.

In accordance therewith, after the synchronization is established, in principle, by way of frequency hopping, the switching timing of the frequencies can be made to coincide in the base wireless device 10 and the remote wireless device 20. In order to maintain this coincidence, the synchronization maintenance signal SM is transmitted in a cyclical manner.

As noted previously, by the electrical power source module 106, the electrical power is provided within the remote wireless device 20. The acquisition unit 124 acquires an internal voltage V within the remote wireless device 20.

As described later, there are a first period T1 in which the communication unit 120 can receive the synchronization establishment signal SE and a second period T2 in which the communication unit 120 cannot receive the synchronization establishment signal SE. The changing unit 126 changes at least one of the first period T1 or the second period T2 depending on a change in the internal voltage V in the remote wireless device 20 in the second period T2. When the internal voltage V at the starting point in time of the first period T1 is equal to or lower than a predetermined voltage described later, the changing unit 126 may perform at least one of a change to shorten the first period T1 or a change to lengthen the second period T2 depending on the predetermined voltage.

The generation unit 128, based on the sensor signal input from the sensor 50, generates the data DT to be transmitted to the base wireless device 10.

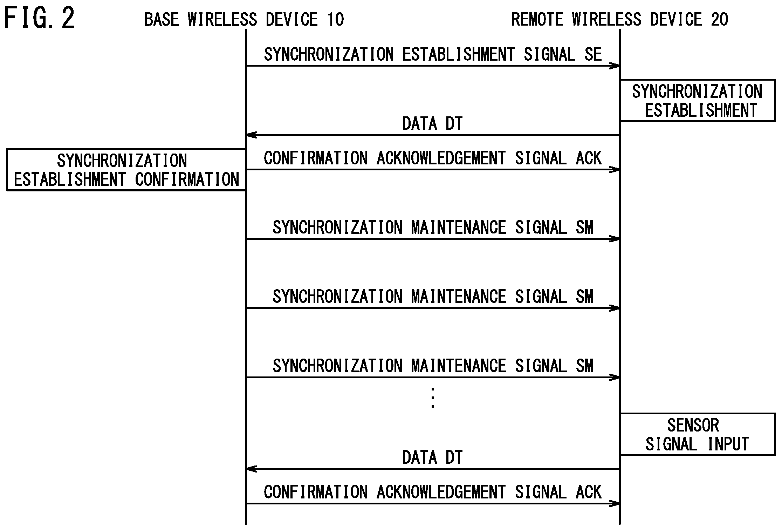

FIG. 2 is a diagram illustrating a sequence of the wireless communication carried out between the base wireless device 10 and one of the remote wireless devices 20. At the beginning of the sequence, the synchronization of the wireless communication is established. Therefore, the computation unit 80 of the base wireless device 10, via the communication module 84, transmits the synchronization establishment signal SE in a cyclical manner by way of broadcasting using a predetermined frequency. The transmission cycle Tt of the synchronization establishment signal SE is a value within the range of roughly 1 to 1000 [ms], and for example, is 250 [ms]. The synchronization establishment signal SE includes information of the clock of the base wireless device 10.

The communication unit 120 of the remote wireless device 20 waits for and receives via the communication module 104 the synchronization establishment signal SE from the base wireless device 10 at the aforementioned predetermined frequency. The synchronization unit 122 of the remote wireless device 20, based on the information contained in the synchronization establishment signal SE, synchronizes the clock of the remote wireless device 20 with the clock of the base wireless device 10. In accordance therewith, in the remote wireless device 20, the synchronization of the wireless communication with the base wireless device 10 is established.

In the case that there is a sensor signal from the sensor 50, then based on the sensor signal, the generation unit 128 of the remote wireless device 20 generates the data DT to be transmitted to the base wireless device 10. Moreover, it should be noted that dummy data DT that is not based on a sensor signal may also be generated. The communication unit 120 of the remote wireless device 20, via the communication module 104, transmits the data DT to the base wireless device 10.

The computation unit 80 of the base wireless device 10, via the communication module 84, receives the data DT from the remote wireless device 20. In accordance therewith, in the base wireless device 10, the synchronization of the wireless communication with the remote wireless device 20 is established. The computation unit 80 of the base wireless device 10, via the communication module 84, transmits the confirmation acknowledgement signal ACK to the remote wireless device 20. The communication unit 120 of the remote wireless device 20, via the communication module 104, receives the confirmation acknowledgement signal ACK from the base wireless device 10.

After having established the synchronization of the wireless communication, in a manner so as to maintain the synchronization thereof, the computation unit 80 of the base wireless device 10, via the communication module 84, broadcasts in a cyclical manner the synchronization maintenance signal SM. The transmission cycle of the synchronization maintenance signal SM is a value within the range of roughly 1 to 1000 [ms], and for example, is 100 [ms]. The synchronization maintenance signal SM includes information of the clock of the base wireless device 10.

The communication unit 120 of the remote wireless device 20, via the communication module 104, receives in a cyclical manner the synchronization maintenance signal SM from the base wireless device 10. The synchronization unit 122 of the remote wireless device 20, based on the information contained in the synchronization maintenance signal SM, corrects the clock of the remote wireless device 20, and thereby maintains the synchronization of the wireless communication with the base wireless device 10.

In a state in which the synchronization of the wireless communication is maintained, it is assumed that the sensor signal is input from the sensor 50 to the remote wireless device 20. In that case, the generation unit 128 of the remote wireless device 20, based on the sensor signal, generates the data DT to be transmitted to the base wireless device 10. The communication unit 120 of the remote wireless device 20 transmits the data DT to the base wireless device 10.

The computation unit 80 of the base wireless device 10 receives the data DT from the remote wireless device 20. The computation unit 80 of the base wireless device 10 transmits the confirmation acknowledgement signal ACK to the remote wireless device 20. The communication unit 120 of the remote wireless device 20 receives the confirmation acknowledgement signal ACK from the base wireless device 10. The reception of the confirmation acknowledgement signal ACK implies that the data DT has been successfully transmitted from the remote wireless device 20 to the base wireless device 10.

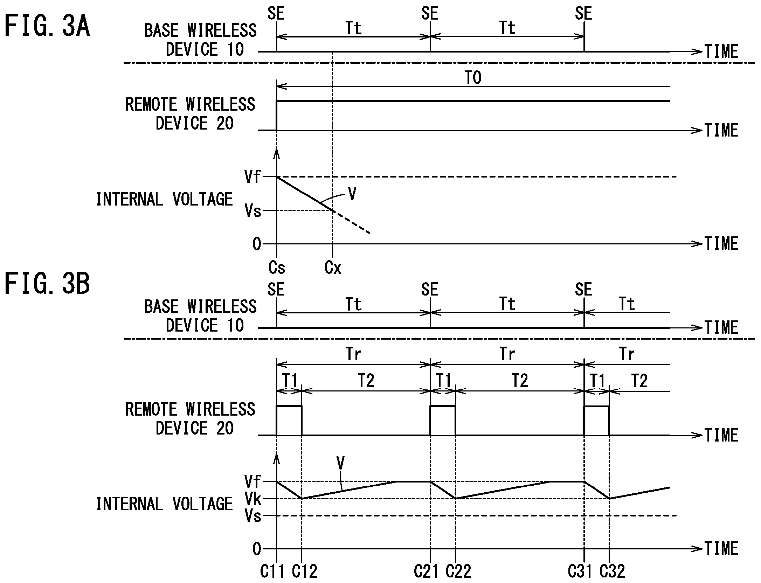

FIG. 3A and FIG. 3B are diagrams illustrating a change in the internal voltage V within the remote wireless device 20 when synchronization of the wireless communication is established. An instability in the wireless communication can often take place. In an unstable communication environment, a signal that is transmitted from the base wireless device 10 may not be received by the remote wireless device 20, and data may be lost. Further, apart therefrom, when the aforementioned frequency switching is carried out, since the frequency is in use by another device, the base wireless device 10 may not be capable of transmitting the data DT at each transmission cycle Tt that is mentioned above.

Therefore, it may take a long time until the remote wireless device 20 receives the synchronization establishment signal SE. The remote wireless device 20 waits for reception of the synchronization establishment signal SE until the remote wireless device 20 receives the synchronization establishment signal SE from the base wireless device 10. In a conventional example shown in FIG. 3A, a standby period T0 for the remote wireless device 20 to stand by for reception of the synchronization establishment signal SE continues until the synchronization establishment signal SE is received.

The process of standing by for the reception of the synchronization establishment signal SE requires power. In the case that the electrical power output of the low output electrical power source 40 is reduced, a voltage drop of the internal voltage V in the remote wireless device 20 occurs while the standby period T0 elapses. As a result, a concern arises in that the internal voltage V may decrease from a voltage value Vf of about several volts to a voltage value Vs or less at which a system down condition of the remote wireless device 20 may occur.

In the conventional example shown in FIG. 3A, the base wireless device 10 transmits the synchronization establishment signal SE at each transmission cycle Tt. At time Cs, the remote wireless device 20 starts standing by for reception of the synchronization establishment signal SE. It is assumed that the remote wireless device 20 cannot receive the synchronization establishment signal SE transmitted from the base wireless device 10 at time Cs that is the same time as the start of the standby. In this case, the standby period T0 continues, and the internal voltage V continues to decrease from the initial voltage Vf.

In the conventional example shown in FIG. 3A, the internal voltage V becomes a voltage value Vs at which a system down of the remote wireless device 20 may occur at time Cx before end time of the transmission cycle Tt started at time Cs. Therefore, in an environment in which the electrical power is supplied from the low output electrical power source 40, it is not preferable for the standby period T0 to continue.

In an example according to the present embodiment shown in FIG. 3B, the system down of the remote wireless device 20 does not occur. In a similar manner to the example shown in FIG. 3A, the base wireless device 10 transmits the synchronization establishment signal SE at each transmission cycle Tt. At time C11, the remote wireless device 20 starts standing by for reception of the synchronization establishment signal SE. The first period T1 for standing by for reception of the synchronization establishment signal SE is started at time C11.

The communication unit 120 of the remote wireless device 20 can receive the synchronization establishment signal SE that reaches the remote wireless device 20 in the first period T1. It is assumed that the communication unit 120 of the remote wireless device 20 cannot receive the synchronization establishment signal SE transmitted from the base wireless device 10 at time C11 that is the same time as the start of the standby. In this case, the communication unit 120 may receive the synchronization establishment signal SE with a delay. Therefore, the communication unit 120 stands by for the reception of the synchronization establishment signal SE until the first period T1 from the time C11 ends.

In the case that the communication unit 120 does not receive the synchronization establishment signal SE in the first period T1, the first period T1 ends and the second period T2 starts at time C12 after time C11. The communication unit 120 of the remote wireless device 20 cannot receive the synchronization establishment signal SE that reaches the remote wireless device 20 in the second period T2. This is realized by, for example, the operation mode of the computation unit 100 of the remote wireless device 20 changing from a normal mode to a sleep mode.

A description will be given concerning the normal mode and the sleep mode. In the normal mode, the communication unit 120, the synchronization unit 122, the acquisition unit 124, the changing unit 126, and the generation unit 128 of the computation unit 100 can each carry out the aforementioned processes that were described using FIG. 1.

By the electrical power source of the computation unit 100 being turned OFF, a sleeping process is executed. When sleeping process is executed and the operation mode of the computation unit 100 becomes the sleep mode, the communication unit 120, the synchronization unit 122, the acquisition unit 124, the changing unit 126, and the generation unit 128 each become a state in which they do not carry out the aforementioned processes. At a timing at which the operation mode of the computation unit 100 becomes the sleep mode, the second period T2 is started. A timer, a counter, or the like (not illustrated) disposed in a peripheral circuit of the computation unit 100 is initiated. Hereinafter, the timer, the counter, or the like is simply referred to as a timer.

The operation mode of the computation unit 100 is the normal mode in the first period T1 and is the sleep mode in the second period T2.

The internal voltage V within the remote wireless device 20 decreases from the voltage value Vf in the first period T1 from time C11. As shown in FIG. 3B, since the first period T1 ends at time C12, and the voltage drop of the internal voltage V stops at a voltage value Vk that is higher than the voltage value Vs. In the second period T2 from time C12 to time C21, the internal voltage V increases and is restored to the voltage value Vf. At time C21, the second period T2 ends and the first period T1 starts again.

Note that the sleeping state is canceled at the timing when the timer expires. That is, the second period T2 ends at the timing when the timer expires. Based on the expiration of the timer, a signal is input from the peripheral circuit in which the timer is arranged to the electrical power source of the computation unit 100. In accordance therewith, the electrical power source of the computation unit 100 is turned ON. By the electrical power source of the computation unit 100 being turned ON, the sleep state is cancelled.

When the sleep state is cancelled and the operation mode of the computation unit 100 becomes the normal mode, the communication unit 120, the synchronization unit 122, the acquisition unit 124, the changing unit 126, and the generation unit 128 each return to a state in which they are capable of carrying out the aforementioned processes. The communication unit 120 stands by for the reception of the synchronization establishment signal SE until the first period T1 from the time C21 ends.

The communication unit 120 can receive the synchronization establishment signal SE in the first period T1 at each of the reception cycles Tr. A period from the start timing of the first period T1 to the start timing of the next first period T1 is a reception cycle Tr. That is, the reception cycle Tr is the sum of the first period T1 and the second period T2. Therefore, the first period T1 and the second period T2 are alternately repeated until the synchronization establishment signal SE is received.

In the example shown in FIG. 3B, the reception cycle Tr is equal to the transmission cycle Tt of the synchronization establishment signal SE. In the case that the first synchronization establishment signal SE is not received, the second period T2 is ended at time C21, and then a second instance of the first period T1 is started. The second instance of the first period T1 ends at time C22 after time C21. A second synchronization establishment signal SE may be received in the second instance of the first period T1.

When the second synchronization establishment signal SE is not received in the first period T1, a second instance of the second period T2 is started at time C22. The internal voltage V decreases to the voltage value Vk at time C22. In the second period T2 from time C22 to time C31, the internal voltage V increases and is restored to the voltage value Vf. After the second period T2 ends at time C31, a third instance of the first period T1 is started. The third instance of the first period T1 ends at time C32 after time C31. A third synchronization establishment signal SE may be received in the third instance of the first period T1.

In this way, in the case that the first period T1 is repeated for each reception cycle Tr until the synchronization establishment signal SE is received, the internal voltage V repeats a decrease and an increase. Therefore, synchronization of wireless communication can be established without causing a system down condition of the remote wireless device 20.

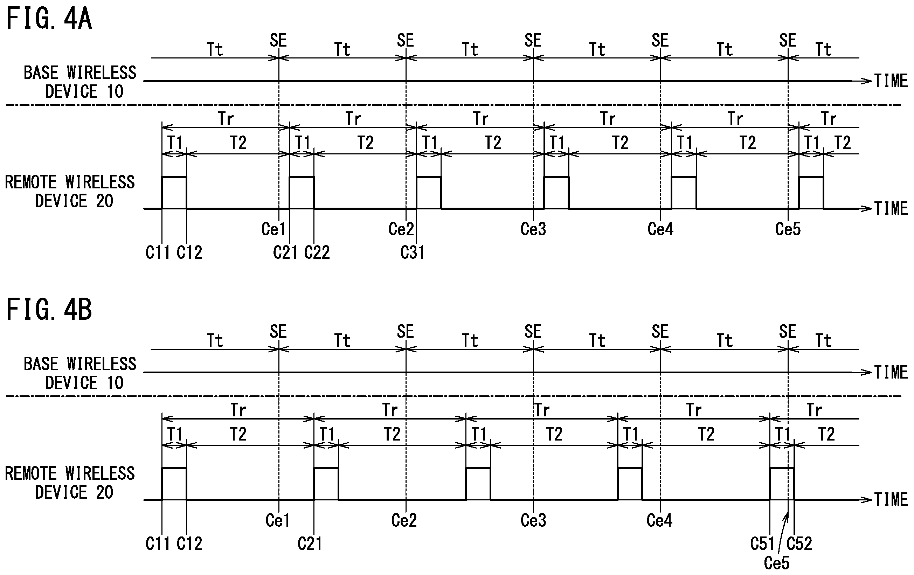

As described above, in the example shown in FIG. 3B, the reception cycle Tr is equal to the transmission cycle Tt of the synchronization establishment signal SE. Since the first period T1 is repeated at each reception cycle Tr, the cycle of the first period T1 in which the synchronization establishment signal SE can be received corresponds to the transmission cycle Tt of the synchronization establishment signal SE. FIG. 4A and FIG. 4B are diagrams illustrating the relationship between the transmission cycle Tt and the reception cycle Tr of the synchronization establishment signal SE. In FIG. 4A and FIG. 4B, the times for which the same reference numerals (for example, C11, C21, and the like) are used need not necessarily represent the same timing.

In the example shown in FIG. 4A, the reception cycle Tr is equal to the transmission cycle Tt, as in the example shown in FIG. 3B. In this example, the transmission time of the synchronization establishment signal SE from the base wireless device 10 is within the second period T2. For example, the transmission time Ce1 of the first synchronization establishment signal SE is not within the first period T1 from time C11 to time C12, but within the second period T2 from time C12 to time C21. Therefore, the first synchronization establishment signal SE is not received by the communication unit 120 of the remote wireless device 20.

Since the reception cycle Tr is equal to the transmission cycle Tt, the transmission time Ce2 of the second synchronization establishment signal SE is not within the first period T1 from time C21 to time C22, but within the second period T2 from time C22 to time C31. Similarly, the transmission times Ce3, Ce4, and Ce5 of the third, fourth, and fifth synchronization establishment signals SE are within the second period T2, not within the first period T1. The same applies to the sixth and subsequent synchronization establishment signals SE. That is, not only the first synchronization establishment signal SE but also the second and subsequent synchronization establishment signals SE are not received. There is a need to solve this problem.

In the example shown in FIG. 4B, the reception cycle Tr is not equal to the transmission cycle Tt. Note that, although FIG. 4B illustrates an example in which the first period T1 is equal to one fifth of the transmission cycle Tt and the second period T2 is equal to the transmission cycle Tt for convenience of description, the present invention is not limited thereto. As shown in FIG. 4B, the transmission time Ce1 of the first synchronization establishment signal SE is not within the first period T1 from time C11 to time C12, but within the second period T2 from time C12 to time C21.

The transmission times Ce2, Ce3, and Ce4 of the second, third, and fourth synchronization establishment signals SE are also within the second period T2, not within the first period T1. Therefore, none of the first to fourth synchronization establishment signals SE is received. However, the transmission time Ce5 of the fifth synchronization establishment signal SE is within the first period T1 from time C51 to time C52. Therefore, the fifth synchronization establishment signal SE can be received by the communication unit 120 of the remote wireless device 20.

In the example shown in FIG. 4A, the remote wireless device 20 cannot receive the synchronization establishment signal SE even if the reception cycle Tr is repeated. In contrast, in the example shown in FIG. 4B, the remote wireless device 20 can receive the synchronization establishment signal SE when the reception cycle Tr is repeated.

For example, in the case that the reception cycle Tr is not a value obtained by multiplying the transmission cycle Tt by a positive integer, the remote wireless device 20 can receive the synchronization establishment signal SE while the reception cycle Tr is repeated. Also, in the case that the reception cycle Tr is not a value obtained by multiplying the transmission cycle Tt by a reciprocal of a positive integer, the remote wireless device 20 can receive the synchronization establishment signal SE while the reception cycle Tr is repeated. Therefore, synchronization of wireless communication is easily established. That is, when a relational equation between the reception cycle Tr and the transmission cycle Tt is expressed as $Tr = n \times Tt$ using a coefficient n (where $n > 0$), if the coefficient n is not a positive integer and is not a reciprocal of a positive integer, the synchronization establishment signal SE can be received.

In the example shown in FIG. 4B, the transmission cycle Tt is equal to five times the first period T1, and the second period T2 is equal to the transmission cycle Tt. As a result, while the reception cycle Tr is repeated five times, there is at least one opportunity that the transmission time of the synchronization establishment signal SE is within the first period T1. This facilitates the design of the wireless communication system 30. The transmission cycle Tt is not limited to a value obtained by multiplying the first period T1 by five, and may be a value obtained by multiplying the first period T1 by a positive integer other than five.

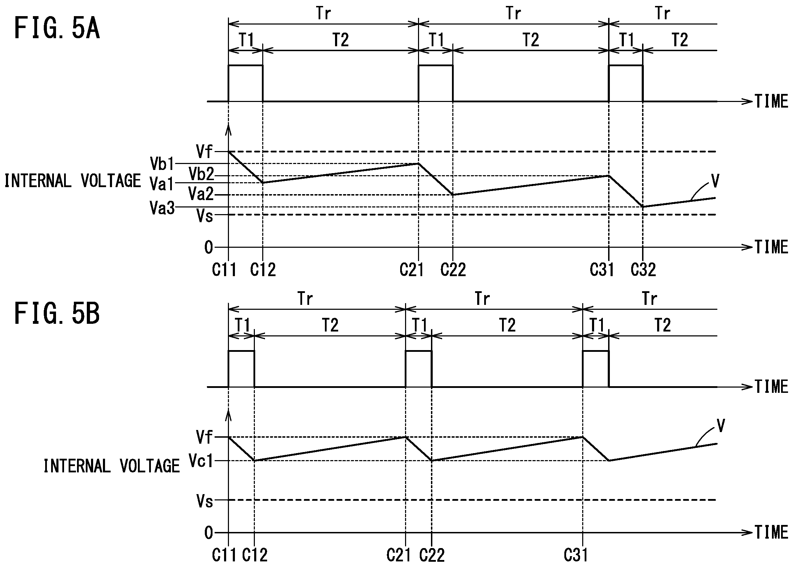

As described above, the internal voltage V may change according to the electrical power output of the low output electrical power source 40. Therefore, when the electrical power output of the low output electrical power source 40 is relatively low, the internal voltage V may continue to decrease as shown in FIG. 5A, unlike FIG. 3B. FIG. 5A and FIG. 5B are diagrams illustrating a change in the internal voltage V within the remote wireless device 20 when synchronization of the wireless communication is established. In FIG. 5A and FIG. 5B, the times for which the same reference numerals (for example, C11, C21, and the like) are used need not necessarily represent the same timing.

At time C11 shown in FIG. 5A, the remote wireless device 20 starts standing by for reception of the synchronization establishment signal SE. At time C11, the internal voltage V is at a voltage value Vf. It is assumed that the remote wireless device 20 does not receive the synchronization establishment signal SE in the first period T1 that starts at time C11. The internal voltage V at time C12 when the first period T1 ends decreases to the voltage value Va1. The second period T2 is started at time C12. In the second period T2, the internal voltage V increases. However, the internal voltage V at time C21 when the second period T2 ends decreases to a voltage value Vb1 that is lower than the voltage value Vf.

It is assumed that the remote wireless device 20 cannot receive the synchronization establishment signal SE in the first period T1 that starts at time C21. The internal voltage V at time C22 when the first period T1 ends decreases to a voltage value Va2 that is lower than the voltage value Va1. The second period T2 is started at time C22. In the second period T2, the internal voltage V increases. However, the internal voltage V at time C31 when the second period T2 ends decreases to a voltage value Vb2 that is lower than the voltage value Vb1.

It is assumed that the remote wireless device 20 cannot receive the synchronization establishment signal SE in the first period T1 that starts at time C31. The internal voltage V at time C32 when the first period T1 ends decreases to a voltage value Va3 that is lower than the voltage value Va2. The second period T2 is started at time C32. In this way, when the internal voltage V continues to decrease, the internal voltage V may eventually reach the aforementioned voltage value Vs.

In view of such a situation, an example in which the first period T1 is made shorter than that in the example shown in FIG. 5A is shown in FIG. 5B. At time C11 shown in FIG. 5B, the remote wireless device 20 starts standing by for reception of the synchronization establishment signal SE. At time C11, the internal voltage V is at a voltage value Vf. It is assumed that the remote wireless device 20 cannot receive the synchronization establishment signal SE in the first period T1 that starts at time C11. The internal voltage V at time C12 when the first period T1 ends decreases to a voltage value Vc1.

The first period T1 in the example shown in FIG. 5B is shorter than the first period T1 in the example shown in FIG. 5A. Therefore, the voltage value Vc1 of the internal voltage V in the example shown in FIG. 5B is higher than the voltage value Va1 of the internal voltage V in the example shown in FIG. 5A. Therefore, in the second period T2 that starts at time C12 and ends at time C21, the internal voltage V increases, and is restored to the voltage value Vf. The length of the second period T2 in the example shown in FIG. 5B is equal to the length of the second period T2 in the example shown FIG. 5A.

In the case that the remote wireless device 20 cannot receive the synchronization establishment signal SE in the first period T1 that starts at time C21 ends at time C22, the internal voltage V decreases to the voltage value Vc1 again. However, in a second period T2 that starts at time C22 and ends at time C31, the internal voltage V increases to the voltage value Vf again.

Thereafter, even if the internal voltage V repeatedly decreases and increases in this manner for each reception cycle Tr until the remote wireless device 20 receives the synchronization establishment signal SE in the first period T1, the internal voltage V does not reach the voltage value Vs. Therefore, synchronization of wireless communication can be established without causing a system down condition of the remote wireless device 20.

In the example shown in FIG. 5A, the voltage value Va1 of the internal voltage V at time C12 is higher than the voltage value Vs at which a system down condition of the remote wireless device 20 may occur. However, in the case that the electrical power output of the low output electrical power source 40 is further reduced, there is a possibility that the voltage value Vf of the internal voltage V at time C11 may become a value close to the voltage value Vs. In this case, the internal voltage V may reach the voltage value Vs before the first period T1 ends. Even in this case, by shortening the first period T1 as shown in FIG. 5B, synchronization of wireless communication can be established without causing a system down condition of the remote wireless device 20.

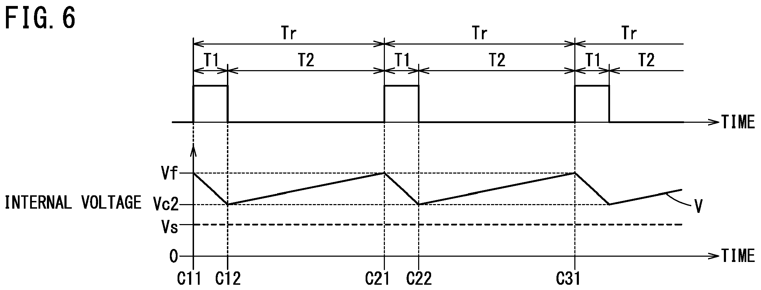

In the case that the electrical power output of the low output electrical power source 40 is relatively high, as shown in FIG. 3B, unlike FIG. 5B, the internal voltage V may be restored to the voltage value Vf during the second period T2 (before the second period T2 ends). In this case, the first period T1 can be made longer. In view of such a situation, an example in which the first period T1 is made longer than that in the example shown in FIG. 3B is shown in FIG. 6. FIG. 6 is a diagram illustrating a change in the internal voltage V within the remote wireless device 20 when the synchronization of the wireless communication is established. In FIG. 5A, FIG. 5B, and FIG. 6, the times for which the same reference numerals (for example, C11, C21, and the like) are used need not necessarily represent the same timing.

At time C11 shown in FIG. 6, the remote wireless device 20 starts standing by for reception of the synchronization establishment signal SE. At time C11, the internal voltage V is at a voltage value Vf. It is assumed that the remote wireless device 20 cannot receive the synchronization establishment signal SE in the first period T1 that starts at time C11. The internal voltage V at time C12 when the first period T1 ends decreases to a voltage value Vc2.

The first period T1 in the example shown in FIG. 6 is longer than the first period T1 in the example shown in FIG. 3B. Therefore, the voltage value Vc2 of the internal voltage V in the example shown in FIG. 6 is higher than the voltage value Vk of the internal voltage V in the example shown in FIG. 3B. Therefore, in the second period T2 that starts at time C12 the internal voltage V increases, and is restored to just the voltage value Vf at time C21 when the second period T2 ends.

The length of the second period T2 in the example shown in FIG. 6 is equal to the length of the second period T2 in the example shown FIG. 3B and in the example shown FIG. 5B. The change in the internal voltage V in the second period T2 in the example shown in FIG. 6 is greater than the change in the internal voltage V in the second period T2 in the example shown in FIG. 5B. The reason for the difference is in the electrical power output of the low output electrical power source 40. In the example shown in FIG. 6, since the electrical power output is relatively high, the internal voltage V can increase more rapidly in the second period T2.

In the case that the remote wireless device 20 fails to receive the synchronization establishment signal SE in the first period T1 that starts at time C21 ends at time C22, the internal voltage V decreases to the voltage value Vc2 again. However, in the second period T2 that starts at time C22 and ends at time C31, the internal voltage V increases to the voltage value Vf again.

Thereafter, even if the internal voltage V repeatedly decreases and increases in this manner for each reception cycle Tr until the remote wireless device 20 receives the synchronization establishment signal SE in the first period T1, the internal voltage V does not reach the voltage value Vs. Therefore, synchronization of wireless communication can be established without causing a system down condition of the remote wireless device 20.

Also, the first period T1 in the example shown in FIG. 6 is longer than the first period T1 in the example shown in FIG. 3B and in the example shown in FIG. 5B. Therefore, the remote wireless device 20 easily receives the synchronization establishment signal SE in the first period T1.

The change in the first period T1 that has been described with reference to FIG. 5B and FIG. 6 is made by the changing unit 126 depending on the change in the internal voltage V in the second period T2. FIG. 7A is a diagram illustrating an example of a parameter that is used to change the first period T1. The parameter that is used to change the first period T1, for example, is a rate of change ΔV of the internal voltage V during the second period T2. The changing unit 126 calculates the rate of change ΔV based on the voltage value of the internal voltage V in the first period T1 immediately before and immediately after the second period T2.

FIG. 7A illustrates a change in the internal voltage V when the wireless communication is established. At time C11 shown in FIG. 7A, the remote wireless device 20 starts standing by for reception of the synchronization establishment signal SE. At time C11, the internal voltage V is at a voltage value Vf.

It is assumed that the remote wireless device 20 cannot receive the synchronization establishment signal SE in the first period T1 that starts at time C11. The internal voltage V at time C12 when the first period T1 ends decreases to a voltage value Va. The second period T2 is started at time C12. The internal voltage V at time C21 when the second period T2 ends increases to a voltage value Vb. At time C21, a new first period T1 starts again.

The first period T1 immediately before the second period T2 ends at time C12. The acquisition unit 124 acquires the voltage value Va of the internal voltage V at time C12. Moreover, in the case that a rate of decrease of the internal voltage V per unit period during the first period T1 is specified in advance, the acquisition unit 124 may acquire the voltage value Va at time C12 by calculating the same.

The first period T1 immediately after the second period T2 is started at time C21. The acquisition unit 124 acquires the voltage value Vb of the internal voltage V at time C21. The changing unit 126, based on the voltage values Va and Vb acquired by the acquisition unit 124, calculates the rate of change ΔV which represents the change in the internal voltage V during the second period T2. The rate of change ΔV of the internal voltage V is expressed by Equation (1).

$$\Delta V = (Vb - Va)/(C21 - C12) \ ...(1)$$

The changing unit 126 changes the first period T1 depending on the rate of change ΔV that is calculated. As the rate of change ΔV is smaller, the changing unit 126 changes the first period T1 to be shorter. As the rate of change ΔV is greater, the changing unit 126 changes the first period T1 to be longer. The changing unit 126 may change the first period T1, by using the table 180 illustrated in FIG. 7B, and the rate of change ΔV that is calculated.

FIG. 7B is a diagram illustrating the table 180 that is used for changing the first period T1. The table 180 is stored in the storage unit 102. In the table 180, there is stored the value of the first period T1 which is changed depending on the rate of change ΔV of the internal voltage V.

As shown in FIG. 7B, in the case that the rate of change ΔV is less than or equal to a first rate of change threshold value D1, the changing unit 126 carries out a change in the first period T1 to a set value T1u. In the case that the rate of change ΔV is greater than the first rate of change threshold value D1, and further, is less than or equal to a second rate of change threshold value D2, the changing unit 126 changes the first period T1 to a set value T1v. The set value T1v is greater than the set value T1u.

In the case that the rate of change ΔV is greater than the second rate of change threshold value D2, the changing unit 126 carries out a change in the first period T1 to a set value T1w. The set value T1w is greater than the set values T1u and T1v. The first rate of change threshold value D1, the second rate of change threshold value D2, and the set values T1u, T1v, and T1w are all determined in advance, in a manner so that the internal voltage V does not reach the voltage value Vs. By changing the first period T1 using the table 180, it is possible to establish synchronization of wireless communication without causing a system down condition of the remote wireless device 20.

As the rate of change ΔV is smaller, the changing unit 126 may change the second period T2 to be longer, instead of changing the first period T1 to be shorter. In this case, as the rate of change ΔV is greater, the changing unit 126 may change the second period T2 to be shorter, instead of changing the first period T1 to be longer.

As the rate of change ΔV is smaller, the changing unit 126 may change the first period T1 to be shorter, and change the second period T2 to be longer. In this case, as the rate of change ΔV is greater, the changing unit 126 changes the first period T1 to be longer, and changes the second period T2 to be shorter. When both the first period T1 and the second period T2 are changed, the change may be performed such that the reception cycle Tr, which is the sum of the first period T1 and the second period T2, is not changed. When the reception cycle Tr is not changed, it is easy to realize the reception cycle Tr that satisfies the condition that the reception cycle Tr is neither a value obtained by multiplying the transmission cycle Tt by a positive integer nor a value obtained by multiplying the transmission cycle Tt by a reciprocal of a positive integer. That is, this facilitates the design of the wireless communication system 30.

As a parameter that is used to change the first period T1, only the voltage value Vb (refer to FIG. 7A) of the internal voltage V at the starting point in time (time C21) of the first period T1 immediately after the second period T2 may be used. The voltage value Vb is acquired by the acquisition unit 124. The changing unit 126 changes the first period T1 depending on only the acquired voltage value Vb.

As shown in FIG. 7A, the voltage value Vb of the internal voltage V is less than or equal to the voltage value Vf of the internal voltage V at time C11. Hereinafter, the voltage value Vf of the internal voltage V at time C11 may also be referred to as a predetermined voltage Vf. However, other predetermined voltages in proximity to the voltage value Vf may be used.

As the difference between the voltage value Vb of the internal voltage V and the predetermined voltage Vf is larger, the changing unit 126 changes the first period T1 to be shorter. As the difference between the voltage value Vb of the internal voltage V and the predetermined voltage Vf is smaller, the changing unit 126 changes the first period T1 to be longer. The changing unit 126 may change the first period T1 using the table 190 illustrated in FIG. 7C, and the voltage value Vb that is acquired.

FIG. 7C is a diagram illustrating the table 190 that is used for changing the first period T1. The table 190 is stored in the storage unit 102. In the table 190, there are stored the values of the first period T1, which is changed depending on the voltage value Vb of the internal voltage V at the starting point in time of the first period T1. A first voltage threshold value Vp1 shown in FIG. 7C is less than the aforementioned predetermined voltage Vf. A second voltage threshold value Vp2 is greater than the first voltage threshold value Vp1 and less than the predetermined voltage Vf.

As shown in FIG. 7A, the difference between the voltage value Vb and the predetermined voltage Vf is larger in the case that the voltage value Vb is smaller than the first voltage threshold value Vp1 than in the case that the voltage value Vb is greater than the first voltage threshold value Vp1. The difference between the voltage value Vb and the predetermined voltage Vf is smaller in the case that the voltage value Vb is greater than the second voltage threshold value Vp2 than in the case that the voltage value Vb is smaller than the second voltage threshold value Vp2.

As shown in FIG. 7C, in the case that the voltage value Vb is less than or equal to the first voltage threshold value Vp1, the changing unit 126 carries out a change in the first period T1 to the set value T1u. In the case that the voltage value Vb is greater than the first voltage threshold value Vp1, and further, is less than or equal to the second voltage threshold value Vp2, the changing unit 126 carries out a change in the first period T1 to the set value T1v. The set value T1v is greater than the set value T1u.

In the case that the voltage value Vb is greater than the second voltage threshold value Vp2, the changing unit 126 carries out a change in the first period T1 to the set value T1w. The set value T1w is greater than the set values T1u and T1v. More specifically, as the difference between the voltage value Vb and the predetermined voltage Vf becomes larger, the shorter the first period T1 becomes, and as the difference between the voltage value Vb and the predetermined voltage Vf become smaller, the longer the first period T1 becomes.

The first voltage threshold value Vp1, the second voltage threshold value Vp2, and the set values T1u, T1v, and T1w are all determined in advance, in a manner so that the internal voltage V does not reach the voltage value Vs. By changing the first period T1 using the table 190, it is possible to establish synchronization of wireless communication without causing a system down condition of the remote wireless device 20.

As the difference between the voltage value Vb of the internal voltage V and the predetermined voltage Vf is larger, the changing unit 126 may change the second period T2 to be longer, instead of changing the first period T1 to be shorter. In this case, as the difference between the voltage value Vb of the internal voltage V and the predetermined voltage Vf is smaller, the changing unit 126 may change the second period T2 to be shorter, instead of changing the first period T1 to be longer.

Further, as the difference between the voltage value Vb of the internal voltage V and the predetermined voltage Vf is larger, the changing unit 126 may change the first period T1 to be shorter, and change the second period T2 to be longer. In this case, as the difference between the voltage value Vb of the internal voltage V and the predetermined voltage Vf is smaller, the changing unit 126 changes the first period T1 to be longer, and changes the second period T2 to be shorter.

When both the first period T1 and the second period T2 are changed, the change may be performed such that the reception cycle Tr, which is the sum of the first period T1 and the second period T2, is not changed. When the reception cycle Tr is not changed, it is easy to realize the reception cycle Tr that satisfies the condition that the reception cycle Tr is neither a value obtained by multiplying the transmission cycle Tt by a positive integer nor a value obtained by multiplying the transmission cycle Tt by a reciprocal of a positive integer. That is, this facilitates the design of the wireless communication system 30.

As a parameter that is used to change the first period T1, only the voltage value Va (refer to FIG. 7A) of the internal voltage V at the ending point in time (time C12) of the first period T1 immediately before the second period T2 may be used. The voltage value Va is acquired by the acquisition unit 124. The changing unit 126 changes the first period T1 depending on only the acquired voltage value Va.

As the difference between the voltage value Va of the internal voltage V and the predetermined voltage Vf is larger, the changing unit 126 changes the first period T1 to be shorter. As the difference between the voltage value Va of the internal voltage V and the predetermined voltage Vf is smaller, the changing unit 126 changes the first period T1 to be shorter. The same processing is carried out as in the case that only the voltage value Vb of the internal voltage V is used as the parameter that is used for changing the first period T1, and therefore, a detailed description of this feature will be omitted.

Moreover, the rate of decrease of the internal voltage V during the first period T1 shown in FIG. 7A changes depending on the generated electrical power output of the low output electrical power source 40. As noted previously, the rate of decrease may be specified in advance. For example, in the case that the rate of decrease is great, it can be predicted that the internal voltage V during the first period T1 will reach the voltage value Vs at which a system down condition may occur. Therefore, the first period T1 may be changed by further taking into consideration the rate of decrease of the internal voltage V during the first period T1. In the case that the rate of decrease is great, the first period T1 is made shorter. Conversely, in the case that the rate of decrease is small, the first period T1 is made longer.

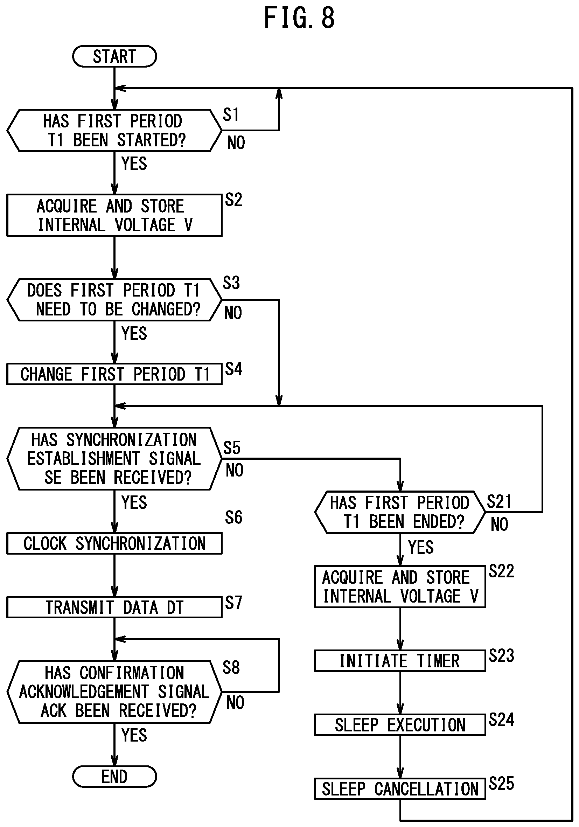

FIG. 8 is a flowchart showing a synchronization establishment processing procedure of the wireless communication in the remote wireless device 20. The present processing procedure is carried out, for example, by the computation unit 100 of the remote wireless device 20. When the present processing procedure is started, the acquisition unit 124 determines whether or not the first period T1 has been started in step S1. In the case that the determination has become YES in step S1, the present processing procedure proceeds to step S2. In the case that the determination has become NO in step S1, the process of step S1 is repeated.

In step S2, the acquisition unit 124 acquires an internal voltage V within the remote wireless device 20 and stores the acquired internal voltage V in the storage unit 102. In step S3, the changing unit 126 determines whether or not the first period T1 needs to be changed. This determination is made based on the internal voltage V in the remote wireless device 20 or a change in the internal voltage V. In the case it has become YES in step S3, the present processing procedure proceeds to step S4. In the case that the determination has become NO in step S3, the present processing procedure proceeds to step S5. In step S4, the changing unit 126 changes the first period T1. At this time, the table 180 or the table 190 stored in the storage unit 102 may be used.

In step S5, the communication unit 120 determines whether or not the synchronization establishment signal SE has been received. In the case that the determination has become YES in step S5, the present processing procedure proceeds to step S6. In the case that the determination has become NO in step S5, the present processing procedure proceeds to step S21.

In step S6, the synchronization unit 122 synchronizes the generation timing of a clock signal of the remote wireless device 20 with a clock signal of the base wireless device 10. In step S7, the communication unit 120 transmits the data DT to the base wireless device 10 via the communication module 104. The data DT is data generated by the generation unit 128 based on, for example, a sensor signal input from the sensor 50.

In step S8, the communication unit 120 determines whether or not the confirmation acknowledgement signal ACK has been received from the base wireless device 10. In the case that the determination has become YES in step S8, the present processing procedure comes to an end. In the case that the determination has become NO in step S8, the process of step S8 is repeated.

In step S21, the acquisition unit 124 determines whether or not the first period T1 has been ended. In the case that the determination has become YES in step S21, the present processing procedure proceeds to step S22. In the case that the determination has become NO in step S21, the present processing procedure returns to step S5.

In step S22, the acquisition unit 124 acquires an internal voltage V within the remote wireless device 20 and stores the acquired internal voltage V in the storage unit 102. The process of step S22 may be performed before the determination process of step S21. In addition, in the case that a rate of decrease of the internal voltage V during the first period T1 is specified in advance, the acquisition unit 124 may acquire the internal voltage V at the end of the first period T1 by calculating the same. In this case, the process of step S22 may be omitted, and the internal voltage V at the end of the first period T1 may be calculated before the process of step S3.

In step S23, the computation unit 100 initiates a timer. In step S24, by the electrical power source of the computation unit 100 turned OFF, the sleeping process is executed. The operation mode of the computation unit 100 is set to the sleep mode. Thereafter, when the timer initiated in step S23 expires, in step S25, by the electrical power source of the computation unit 100 being turned ON, the sleep state is cancelled and the second period T2 ends. In accordance with the process of step S25, when the operation mode of the computation unit 100 returns to the normal mode, the present processing procedure returns to step S1.

Concerning the above-described disclosure, the following supplementary notes are further disclosed.

(Supplementary Note 1)

The remote wireless device (20) is configured to carry out wireless communication with the base wireless device (10), and includes the communication unit (120) configured to receive in the reception cycle (Tr) the synchronization establishment signal (SE) transmitted from the base wireless device at each transmission cycle (Tt), and the synchronization unit (122) configured to synchronize the generation timing of the clock signal of the remote wireless device with the clock signal of the base wireless device, in the case that the synchronization establishment signal has been received, wherein the reception cycle is the sum of the first period (T1) in which the communication unit is capable of receiving the synchronization establishment signal and the second period (T2) in which the communication unit is not capable of receiving the synchronization establishment signal, and has neither the value obtained by multiplying the transmission cycle by the positive integer nor the value obtained by multiplying the transmission cycle by the reciprocal of the positive integer. In accordance with such a configuration, synchronization of wireless communication is easily established.

(Supplementary Note 2)

In the remote wireless device according to Supplementary Note 1, the second period may be equal to the transmission cycle. In accordance with such a configuration, the design of the wireless communication system is facilitated.

(Supplementary Note 3)

In the remote wireless device according to Supplementary Note 2, the transmission cycle may have the value obtained by multiplying the first period by the positive integer. In accordance with such a configuration, the design of the wireless communication system is further facilitated.

(Supplementary Note 4)

The remote wireless device according to any one of Supplementary Notes 1 to 3, may further include the acquisition unit (124) configured to acquire the internal voltage (V) within the remote wireless device, and the changing unit (126) configured to change at least one of the first period or the second period, depending on the change in the internal voltage in the second period. In accordance with such a configuration, it is possible to establish synchronization of wireless communication without causing a system down condition of the remote wireless device.

(Supplementary Note 5)

In the remote wireless device according to Supplementary Note 4, the changing unit may change the first period and the second period without changing the reception cycle. In accordance with such a configuration, the design of the wireless communication system is facilitated.

(Supplementary Note 6)

The remote wireless device according to any one of Supplementary Notes 1 to 3 may further include the acquisition unit configured to acquire the internal voltage within the remote wireless device, and the changing unit configured to perform at least one of the change to shorten the first period or the change to lengthen the second period, depending on the predetermined voltage (Vf), in the case that the internal voltage at the starting point in time or the ending point in time of the first period is equal to or lower than the predetermined voltage. In accordance with such a configuration, it is possible to establish synchronization of wireless communication without causing a system down condition of the remote wireless device.

(Supplementary Note 7)

In the remote wireless device according to Supplementary Note 6, the changing unit may shorten the first period and lengthen the second period without changing the reception cycle. In accordance with such a configuration, the design of the wireless communication system is facilitated.

(Supplementary Note 8)

In the remote wireless device according to Supplementary Note 6, as the difference between the predetermined voltage and the internal voltage is larger, the first period may be changed to be shorter by the changing unit, or the second period may be changed to be longer by the changing unit. In accordance with such a configuration, it is possible to establish synchronization of wireless communication without causing a system down condition of the remote wireless device.
It should be noted that the present invention is not limited to the disclosure described above, and various configurations could be adopted therein without departing from the essence and gist of the present invention.

**Claims**

1. A remote wireless device (20) configured to carry out wireless communication with a base wireless device (10), the remote wireless device comprising:

    a communication unit (120) configured to receive in a reception cycle (Tr) a synchronization establishment signal (SE) transmitted from the base wireless device at each transmission cycle (Tt); and

a synchronization unit (122) configured to synchronize a generation timing of a clock signal of the remote wireless device with a clock signal of the base wireless device, in a case that the synchronization establishment signal has been received,

wherein the reception cycle is a sum of a first period (T1) in which the communication unit is capable of receiving the synchronization establishment signal and a second period (T2) in which the communication unit is not capable of receiving the synchronization establishment signal, and has neither a value obtained by multiplying the transmission cycle by a positive integer nor a value obtained by multiplying the transmission cycle by a reciprocal of a positive integer.

2. The remote wireless device according to claim 1, wherein the second period is equal to the transmission cycle.

3. The remote wireless device according to claim 2, wherein the transmission cycle has a value obtained by multiplying the first period by a positive integer.

4. The remote wireless device according to any one of claims 1 to 3, further comprising:

an acquisition unit (124) configured to acquire an internal voltage (V) within the remote wireless device; and

a changing unit (126) configured to change at least one of the first period or the second period, depending on a change in the internal voltage in the second period.

5. The remote wireless device according to claim 4, wherein the changing unit changes the first period and the second period without changing the reception cycle.

6. The remote wireless device according to any one of claims 1 to 3, further comprising:

an acquisition unit configured to acquire an internal voltage within the remote wireless device; and

a changing unit configured to perform at least one of a change to shorten the first period or a change to lengthen the second period, depending on a predetermined voltage (Vf), in a case that the internal voltage at a starting point in time or an ending point in time of the first period is equal to or lower than the predetermined voltage.

7. The remote wireless device according to claim 6, wherein the changing unit shortens the first period and lengthens the second period without changing the reception cycle.

8. The remote wireless device according to claim 6, wherein as a difference between the predetermined voltage and the internal voltage is larger, the first period is changed to be shorter by the changing unit, or the second period is changed to be longer by the changing unit.

# FIG. 1

# FIG. 2

BASE WIRELESS DEVICE 10

REMOTE WIRELESS DEVICE 20

SYNCHRONIZATION ESTABLISHMENT SIGNAL SE

SYNCHRONIZATION ESTABLISHMENT

DATA DT

SYNCHRONIZATION ESTABLISHMENT CONFIRMATION

CONFIRMATION ACKNOWLEDGEMENT SIGNAL ACK

SYNCHRONIZATION MAINTENANCE SIGNAL SM

SYNCHRONIZATION MAINTENANCE SIGNAL SM

SYNCHRONIZATION MAINTENANCE SIGNAL SM

...

SENSOR SIGNAL INPUT

DATA DT

CONFIRMATION ACKNOWLEDGEMENT SIGNAL ACK

FIG. 3A

BASE WIRELESS DEVICE 10

SE — Tt — SE — Tt — SE → TIME

REMOTE WIRELESS DEVICE 20

T0 → TIME

INTERNAL VOLTAGE

Vf ... V

Vs

0 → TIME

Cs Cx

FIG. 3B

BASE WIRELESS DEVICE 10

SE — Tt — SE — Tt — SE — Tt → TIME

REMOTE WIRELESS DEVICE 20

Tr Tr Tr
T1 T2 T1 T2 T1 T2

→ TIME

INTERNAL VOLTAGE

Vf V
Vk
Vs

0 → TIME

C11 C12 C21 C22 C31 C32

EP 4 757 442 A1

FIG. 4A

FIG. 4B

EP 4 757 442 A1

# FIG. 5A

# FIG. 5B

# FIG. 6

INTERNAL VOLTAGE

# FIG. 7A

INTERNAL VOLTAGE

$$\Delta V = \frac{Vb-Va}{C21-C12}$$

Vf, Vp2, Vb, Vp1, Va

T1    T2    T1

0

C11    C12    C21    TIME

V

# FIG. 7B

180

| ΔV | T1 |
|---|---|
| ΔV<=D1 | T1=T1u |
| D1<ΔV<=D2 | T1=T1v |
| D2<ΔV | T1=T1w |

# FIG. 7C

190

| Vb | T1 |
|---|---|
| Vb<=Vp1 | T1=T1u |
| Vp1<Vb<=Vp2 | T1=T1v |
| Vp2<Vb | T1=T1w |

# FIG. 8

```
                    ┌─────────┐
                    │  START  │
                    └─────────┘
                         │
          ┌──────────────┴──────────────┐
          ▼                             │
    HAS FIRST PERIOD  S1                │
    T1 BEEN STARTED?  ──── NO ──────────┘
          │ YES
          ▼
    ACQUIRE AND STORE  S2
    INTERNAL VOLTAGE V
          │
          ▼
    DOES FIRST PERIOD T1  S3
    NEED TO BE CHANGED?  ──── NO ──────┐
          │ YES                        │
          ▼                            │
    CHANGE FIRST PERIOD T1  S4         │
          │                            │
          ▼◄───────────────────────────┘
    HAS SYNCHRONIZATION
    ESTABLISHMENT SIGNAL  S5
    SE BEEN RECEIVED?  ──── NO ──────┐
          │ YES                      ▼
          ▼                    HAS FIRST PERIOD  S21
    CLOCK SYNCHRONIZATION  S6  T1 BEEN ENDED?  ──── NO
          │                          │ YES
          ▼                          ▼
    TRANSMIT DATA DT  S7       ACQUIRE AND STORE  S22
          │                    INTERNAL VOLTAGE V
          ▼                          │
    HAS CONFIRMATION                 ▼
    ACKNOWLEDGEMENT SIGNAL  S8  INITIATE TIMER  S23
    ACK BEEN RECEIVED?  ── NO        │
          │ YES                      ▼
          ▼                    SLEEP EXECUTION  S24
        ┌─────┐                     │
        │ END │                     ▼
        └─────┘              SLEEP CANCELLATION  S25
```

## INTERNATIONAL SEARCH REPORT

| International application No. |
|---|
| **PCT/JP2024/018659** |

**A. CLASSIFICATION OF SUBJECT MATTER**

*H04W 56/00*(2009.01)i; *H04W 4/38*(2018.01)i; *H04W 52/02*(2009.01)i
FI: H04W56/00 130; H04W52/02 130; H04W4/38

According to International Patent Classification (IPC) or to both national classification and IPC

**B. FIELDS SEARCHED**

Minimum documentation searched (classification system followed by classification symbols)

H04W56/00; H04W4/38; H04W52/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-48027 A (OSASI TECHNOS INC.) 28 February 2008 (2008-02-28) paragraphs [0020], [0025]-[0032], fig. 3 | 1, 2 |
| Y | paragraphs [0020], [0025]-[0032], fig. 3 | 4, 5 |
| A | entire text, all drawings | 3, 6–8 |
| Y | JP 2018-190053 A (ROHM CO., LTD.) 29 November 2018 (2018-11-29) paragraphs [0002], [0004], [0039]-[0061], fig. 3, 5 | 4, 5 |
| A | entire text, all drawings | 1-3, 6-8 |

☐ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/018659**

| Patent document cited in search report | | | Publication date (day/month/year) | Patent family member(s) | Publication date (day/month/year) |
|---|---|---|---|---|---|
| JP | 2008-48027 | A | 28 February 2008 | (Family: none) | |
| JP | 2018-190053 | A | 29 November 2018 | (Family: none) | |

Form PCT/ISA/210 (patent family annex) (July 2022)

**EP 4 757 442 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021190855 A

- JP 2017188868 A